(19) **Europäisches Patentamt / European Patent Office / Office européen des brevets**

(11) **EP 4 546 677 A1**

(12) **EUROPEAN PATENT APPLICATION**
published in accordance with Art. 153(4) EPC

(43) Date of publication:
**30.04.2025 Bulletin 2025/18**

(21) Application number: **23826174.7**

(22) Date of filing: **09.06.2023**

(51) International Patent Classification (IPC):
**H04L 1/00** $^{(2006.01)}$

(52) Cooperative Patent Classification (CPC):
**H04L 1/00; H04L 5/00**

(86) International application number:
**PCT/CN2023/099385**

(87) International publication number:
**WO 2023/246525 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.06.2022 CN 202210714204**

(71) Applicant: **Datang Mobile Communications Equipment Co., Ltd.**
**Beijing 100085 (CN)**

(72) Inventor: **BAI, Wei**
**Beijing 100085 (CN)**

(74) Representative: **Studio Torta S.p.A.**
**Via Viotti, 9**
**10121 Torino (IT)**

(54) **DATA TRANSMISSION METHOD, DEVICE AND APPARATUS, AND STORAGE MEDIUM**

(57) Provided in the embodiments of the present disclosure are a data transmission method, device and apparatus, and a storage medium, wherein the method is applied to a terminal. The method comprises: performing segmentation and bit filling processing on a coded bit, so as to obtain K bit segments, wherein the K bit segments comprise M coded bit segments and (K-M) filling bit segments, K and M being positive integers, and K being greater than M; performing interleaving processing on the K bit segments in units of segments, modulating each interleaved coded bit segment into one or more data symbols to be transmitted, and modulating each interleaved filling bit segment into a blank symbol; and sending the data symbol and the blank symbol to a network device.

Performing segmenting and bit padding on encoded bits to obtain K bit segments, where the K bit segments include M encoded bit segments and K-M padded bit segments, K and M are positive integers, and K is greater than M — 300

Interleaving the K bit segments in unit of segment, modulating each of the interleaved encoded bit segments into one or more to-be-transmitted data symbols, and modulating each of the interleaved padded bit segments into one or more empty symbols — 301

Transmitting the data symbols and the empty symbols to a network device — 302

FIG. 3

**Description**

CROSS-REFERENCES TO RELATED APPLICATIONS

The present application claims priority to Chinese patent application No. 202210714204.6 filed on June 22, 2022, entitled "Data Transmission Method, Device and Apparatus, and Storage Medium", which is hereby incorporated by reference in its entirety.

FIELD

The present application relates to the field of radio communications, and in particular, to methods and apparatuses for data transmission, devices and a storage medium.

BACKGROUND

Uncoordinated random access and transmission (URAT) technology is a new uncoordinated non-orthogonal multiple access technology and is an integration and upgrade of the random access technology and the multiple access transmission technology. In the URAT, initial access and data transmission are no longer regarded as two independent procedures, and are integrated into one procedure to support the access and transmission of a huge quantity of terminals in a future radio communication system, reducing delay, and improving the success rate of access and transmission.
In the uncoordinated non-orthogonal multiple access technology, the huge quantity of terminals need to share resources. Therefore, transmission signals between terminals need to be separated as much as possible and a base station may detect the data from each terminal separately. Therefore, how to provide an effective data transmission scheme that may facilitate the base station to accurately detect the data from each terminal is an important issue that the industry needs to solve urgently.

BRIEF SUMMARY

Embodiments of the present application provide methods and apparatuses for data transmission, devices and a storage medium, which are used to separate the transmission signals between terminals as much as possible and the base station may accurately detect the data from each terminal.
An embodiment of the present application provides a method for data transmission, performed by a terminal, including:

performing segmenting and bit padding on encoded bits to obtain K bit segments, where the K bit segments include M encoded bit segments and K-M padded bit segments, K and M are positive integers, and K is greater than M;

interleaving the K bit segments in unit of segment, modulating each of the interleaved encoded bit segments into one or more to-be-transmitted data symbols, and modulating each of the interleaved padded bit segments into empty symbols; and

transmitting the data symbols and the empty symbols to a network device.

In an embodiment, after modulating the each of the interleaved encoded bit segments into the one or more to-be-transmitted data symbols, the method further includes:
transmitting a demodulation reference signal (DMRS) symbol to the network device based on a resource element (RE) for transmitting the data symbols.
In an embodiment, transmitting the DMRS symbol to the network device based on the RE for transmitting the data symbols includes:
transmitting the DMRS symbol to the network device at the RE for transmitting the data symbols.
In an embodiment, transmitting the DMRS symbol to the network device at the RE for transmitting the data symbols includes:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

In an embodiment, before performing segmenting and bit padding on the encoded bits to obtain the K bit segments, the method further includes:

receiving indication information transmitted from the network device, where the indication information is used for indicating associated parameters for the terminal to perform data transmission;
the associated parameters for the terminal to perform data transmission include one or more of:

a quantity N of the encoded bits;

a quantity M of the encoded bit segments;

a quantity K of the bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

An embodiment of the present application further provides a method for data transmission, performed by a network device, including:

receiving a data signal transmitted from a terminal;

determining a resource element (RE) used by the terminal transmitting data symbols based on an RE corresponding to the data signal and a mode used by the terminal to interleave bit segments; and

completing a detection for the data symbols transmitted from the terminal based on the RE used by the terminal transmitting the data symbols to obtain encoded bits transmitted from the terminal.

In an embodiment, completing the detection for the data symbols transmitted from the terminal based on the RE used by the terminal transmitting the data symbols includes:

decoding a demodulation reference signal (DMRS) symbol segment by segment using a received signal at the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

In an embodiment, before receiving the data signal transmitted from the terminal, the method further includes:

transmitting indication information to the terminal, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

An embodiment of the present application further provides a terminal, including a memory, a transceiver and a processor, where

the memory is used for storing a computer program, the transceiver is used for receiving and transmitting data under control of the processor, and the processor is used for reading the computer program in the memory and performing the following operations:

performing segmenting and bit padding on encoded bits to obtain K bit segments, where the K bit segments include M encoded bit segments and K-M padded bit segments, K and M are positive integers, and K is greater than M;

interleaving the K bit segments in unit of segment, modulating each of the interleaved encoded bit segments into one or more to-be-transmitted data symbols, and modulating each of the interleaved padded bit segments into empty symbols; and

transmitting the data symbols and the empty symbols to a network device.

In an embodiment, after modulating the each of the interleaved encoded bit segments the into one or more to-be-transmitted data symbols, the operations further include:
transmitting a demodulation reference signal (DMRS) symbol to the network device based on a resource element (RE) for transmitting the data symbols.
In an embodiment, transmitting the DMRS symbol to the network device based on the RE for transmitting the data symbols includes:
transmitting the DMRS symbol to the network device at the RE for transmitting the data symbols.
In an embodiment, transmitting the DMRS symbol to the network device at the RE for transmitting the data symbols includes:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

In an embodiment, before performing segmenting and bit padding on the encoded bits to obtain the K bit segments, the operations further include:

receiving indication information transmitted from the network device, where the indication information is used for indicating associated parameters for the terminal to perform data transmission;

the associated parameters for the terminal to perform data transmission include one or more of:

a quantity N of the encoded bits;

a quantity M of the encoded bit segments;

a quantity K of the bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

An embodiment of the present application provides a network device, including a memory, a transceiver and a processor, where
the memory is used for storing a computer program, the transceiver is used for receiving and transmitting data under control of the processor, and the processor is used for reading the computer program in the memory and performing the following operations:

receiving a data signal transmitted from a terminal;

determining a resource element (RE) used by the terminal transmitting data symbols based on an RE corresponding to the data signal and a mode used by the terminal to interleave bit segments; and

completing a detection for the data symbols transmitted from the terminal based on the RE used by the terminal transmitting the data symbols to obtain encoded bits transmitted from the terminal.

In an embodiment, completing the detection for the data symbols transmitted from the terminal based on the RE used by the terminal transmitting the data symbols includes:

decoding a demodulation reference signal (DMRS) symbol segment by segment using a received signal on the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

In an embodiment, before receiving the data signal transmitted from the terminal, the operations further include:

transmitting indication information to the terminal, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

An embodiment of the present application further provides an apparatus for data transmission, including:

a segmenting and bit padding unit, used for performing segmenting and bit padding on encoded bits to obtain K bit segments, where the K bit segments include M encoded bit segments and K-M padded bit segments, K and M are positive integers, and K is greater than M;

an interleaving and modulating unit, used for interleaving the K bit segments in unit of segment, modulating each of the interleaved encoded bit segments into one or more to-be-transmitted data symbols, and modulating each of the interleaved padded bit segments into empty symbols; and

a first transmitting unit, used for transmitting the data symbols and the empty symbols to a network device.

An embodiment of the present application further provides an apparatus for data transmission, including:

a second receiving unit, used for receiving a data signal transmitted from a terminal;

a determining unit, used for determining a resource element (RE) used by the terminal transmitting data symbols based on an RE corresponding to the data signal and a mode used by the terminal to interleave bit segments; and

a detecting unit, used for completing a detection for the data symbols transmitted from the terminal based on the RE used by the terminal transmitting the data symbols to obtain encoded bits transmitted from the terminal.

An embodiment of the present application further provides a computer-readable storage medium storing a computer program, where the computer program causes a computer to perform the methods for data transmission described above.

An embodiment of the present application further provides a communication device storing a computer program, where the computer program causes the communication device to perform the methods for data transmission described above.

An embodiment of the present application further provides a processor-readable storage medium storing a computer program, where the computer program causes a computer to perform the methods for data transmission described above.

An embodiment of the present application further provides a chip product storing a computer program, where the computer program causes the chip product to perform the methods for data transmission described above.

In the methods and apparatuses for data transmission, the devices and the storage medium provided by the embodiment of the present application, by performing segmenting and bit padding on the encoded bits and interleaving the bit segments obtained by segmenting and performing bit padding in unit of segment, the encoded bit segments may be dispersed and the data symbols obtained by subsequently modulating the encoded bit segments are correspondingly mapped to different REs in a relatively dispersed manner, the transmission signals between the terminals may be separated as much as possible, and the base station may accurately detect the data from each terminal.

BRIEF DESCRIPTION OF THE DRAWINGS

To illustrate solutions in the embodiments of the present application or the related art more clearly, the drawings used in the descriptions of the embodiments or the prior art are briefly described below. The drawings in the following description are some embodiments of the present application, and other drawings may be obtained based on these drawings without any creative work for those skilled in the related art.

FIG. 1 is a schematic diagram of a principle of URAT according to the related art;

FIG. 2 is a schematic diagram of a single-symbol DMRS and a double-symbol DMRS according to the related art;

FIG. 3 is a first schematic flowchart of a method for data transmission according to an embodiment of the present application;

FIG. 4 is a second schematic flowchart of a method for data transmission according to an embodiment of the present application;

FIG. 5 is a schematic diagram of interleaved bit segments according to an embodiment of the present application.

FIG. 6 is a schematic structural diagram of a terminal according to an embodiment of the present application;

FIG. 7 is a schematic structural diagram of a network device according to an embodiment of the present application.

FIG. 8 is a first schematic structural diagram of an apparatus for data transmission according to an embodiment of the present application; and

FIG. 9 is a second schematic structural diagram of an apparatus for data transmission according to an embodiment of the present application.

DETAILED DESCRIPTION

In the embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Some contents associated with embodiments of the present application are firstly introduced to understand solutions of the embodiments of the present application more clearly.

1. Uncoordinated non-orthogonal multiple access technology

Uncoordinated random access and transmission (URAT) technology is an integration and upgrade of the random access technology and the multiple access transmission technology. In the URAT, initial access and data transmission are no longer regarded as two independent procedures, and are integrated into one procedure to support the access and transmission of a huge quantity of terminals, reduce delay, and improve success rates of access and transmission.

A main feature of URAT is to implement both random access and multiple access transmission without requiring network coordination. Without requiring network coordination means that the network does not need to acknowledge the access identity of the terminal and does not need to schedule transmission resources.

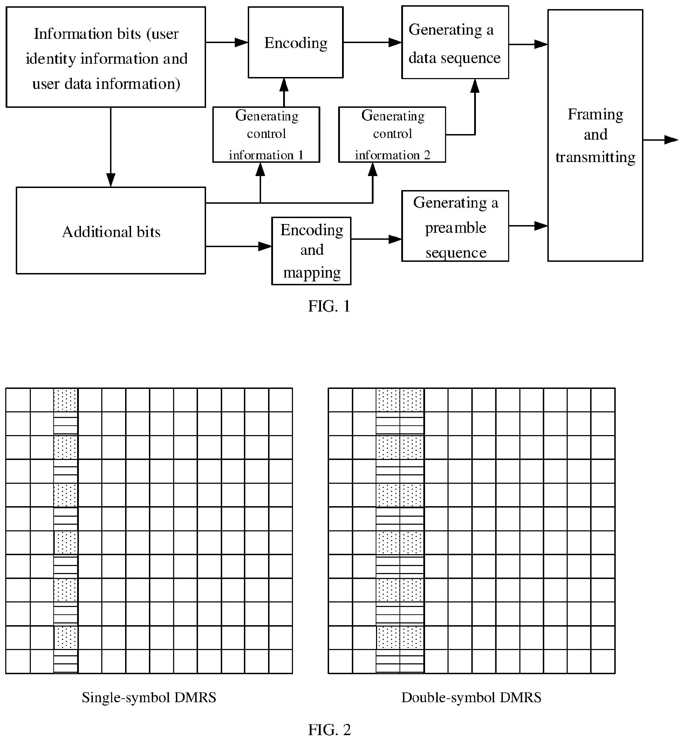

FIG. 1 is a schematic diagram of a principle of URAT according to the related art. In FIG. 1, additional bits are also referred as to metadata bits and are generated from information bits, such as last few bits of the information bits, cyclic redundancy check (CRC) bits of the information bits, etc.

The terminal transmits a preamble sequence and a data sequence in a period until a maximum quantity of transmissions of the data sequence is reached, or the acknowledgment information fed back from the base station for indicating that the network has correctly received the information bits or information of stopping access transmission transmitted from a network broadcast is received.

In the URAT scheme, procedures at a terminal side includes:

(1) combining user identity information and user data information to obtain information bits;

(2) obtaining additional bits, such as CRC bits of the information bits, transmission indication information and randomized bits, etc. based on the information bits;

(3) performing code mapping based on the additional bits to generate the preamble sequence;

(4) generating control information 1 and control information 2 based on the additional bits, respectively;

(5) generating an encoded sequence based on the control information 1, for example, an interleaving mode used by the encoded sequence is determined by the control information 1;

(6) generating a data sequence based on the control information 2, for example, a repetition mode used by the data sequence is determined by the control information 2;

(7) multiplexing the preamble sequence with the data sequence and transmitting them periodically; and

(8) receiving acknowledgment information for the information bit from the base station, where the acknowledgment information includes a sequence number of the preamble sequence.

2. Design of physical uplink shared channel (PUSCH) demodulation reference signal (DMRS)

When transform precoding is disabled, that is, a waveform is multiplexed by cyclicprefix-orthogonal frequency division multiplexing (CP-OFDM), the PUSCH DMRS has only configuration type 1 in the frequency domain mapping.

In the case of a single symbol, configuration type 1 supports up to 4 ports of which two ports 0 and 1 and the other two ports 2 and 3 are in different code division multiplexing groups (CDM groups). In each CDM group, for example, ports 0 and 1 may be orthogonalized by frequency domain orthogonal complementary codes (OCC), so that the 4 ports are orthogonalized.

In the case of double symbols, configuration type 1 supports up to 8 ports, because in addition to frequency domain OCC, time domain OCC may also be used for orthogonality, and more ports may be supported.

FIG. 2 is a schematic diagram of a single-symbol DMRS and a double-symbol DMRS according to the related art. In the case of single symbol DMRS, the horizontal bar grid represents DMRS resource elements (RE) for port 0/1 in the same CDM group, and the dotted grid represents DMRS REs for ports 2/3 in the same CDM group. In the case of double-symbol DMRS, the horizontal bar grid represents DMRS REs for ports 0/1/4/5 in the same CDM group, and the dotted grid represents DMRS REs for ports 2/3/6/7 in the same CDM group. As shown in FIG. 2, DMRS needs to be evenly distributed within the frequency domain resource range for PUSCH multiplexing.

In the URAT scheme, data transmitted from a huge quantity of terminals is eventually multiplexed on the same resource, and in case that the network device expects to be able to detect the data from each terminal respectively, it is necessary to separate the transmission signals between the terminals as much as possible. Therefore, various embodiments of the present application provide a solution for data transmission between a terminal and a network device. By performing segmenting and bit padding on the encoded bits, interleaving the bit segments obtained by segmenting and performing bit padding in unit of segment, and then performing modulating and transmitting operations, the transmission signals between the terminals are separated as much as possible, and the network device may accurately detect the data from each terminal.

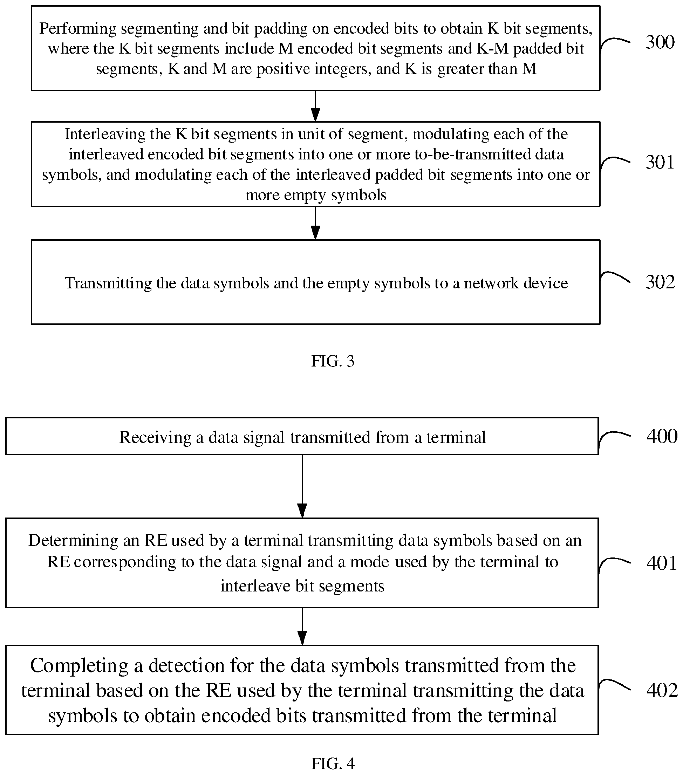

FIG. 3 is a first schematic flowchart of a method for data transmission according to an embodiment of the present application. The method is performed by a terminal. As shown in FIG. 3, the method includes the following steps:

step 300: performing segmenting and bit padding on encoded bits to obtain K bit segments, where the K bit segments include M encoded bit segments and K-M padded bit segments, K and M are positive integers, and K is greater than M;

step 301: interleaving the K bit segments in unit of segment, modulating each of the interleaved encoded bit segments into one or more to-be-transmitted data symbols, and modulating each of the interleaved padded bit segments into one or more empty symbols; and

step 302: transmitting the data symbols and the empty symbols to a network device.

In an embodiment, the encoded bits may be bits obtained by encoding in the URAT scheme. In the embodiment of the present application, multiple encoded bits are segmented to obtain multiple encoded bit segments. For example, N encoded bits are segmented to obtain M encoded bit segments, each segment has B bits, where N = M * B.

Padded bit segment refers to a segment of an uncertain bit padded after the encoded bits and each padded bit segment includes one or more uncertain bits. In an embodiment, each encoded bit segment and each padded bit segment may include an equal quantity of bits. For example, each segment includes B bits.

In an embodiment, the above-mentioned uncertain bits may be bits that do not represent specific information (such as 0 or 1), or may be bits that are only used as placeholders.

The terminal may perform segmenting and bit padding on the encoded bits in different orders. For example, the encoded bits may be segmented to obtain M encoded bit segments, and then a segment of multiple uncertain bits may be padded after the last encoded bit segment; or multiple uncertain bits may be padded after the last encoded bit, and then the encoded bits and the padded uncertain bits may be segmented. That is, performing segmenting and bit padding is not specifically limited as long as K bit segments including M encoded bit segments and K-M padded bit segments may be obtained.

For example, the quantity of encoded bits N = 80 with 2 bits as a segment (i.e., B = 2), the 80 encoded bits may be segmented into M = 40 encoded bit segments, and 320 uncertain bits used only for placeholders are padded after these 40 encoded bit segments, that is, 160 padded bit segments are padded (K-M = 160), and finally K = 40 + 160 = 200 bit segments are obtained.

In an embodiment, the quantity K of bit segments may be transmitted to the terminal after it is determined by the network device based on the requirements of the dispersion degree of the transmitted signals of each terminal. It may also be determined by the terminal based on the actual needs of the transmitted signal, and there is no specific limitation. K is greater than M. In an embodiment, K may be 5 times or more than 5 times of M.

After obtaining K bit segments, the terminal may interleave the K bit segments in unit of segment using an interleaver. Each encoded bit segment and each padded bit segment are interleaved with each other, and each encoded bit segment may be dispersed. Data symbols obtained by subsequently modulating the encoded bit segments are correspondingly mapped to different REs in a relatively dispersed manner, and the transmission signals between multiple terminals may be separated as much as possible, which is conducive for the network equipment (such as base stations) to detect the data from each terminal. The specific interleaving mode is not limited here, and traditional interleaving may be used. For example, interleaving may be completed using a group interleaver in a line-in-column-out manner starting from a specific start position.

After interleaving, the terminal may modulate each interleaved encoded bit segment using, for example, quadrature phase shift keying (QPSK) or any other modulation to obtain a data symbol and the specific situation is not limited. In the implementation of the present application, each encoded bit segment may be modulated into at least one to-be-transmitted data symbol.

After interleaving, for the padded bit segments, the terminal may modulate the padded bit segments into empty symbols, and no signal is transmitted at the RE corresponding to these empty symbols. The padded bit segments may be modulated into empty symbols using traditional modulation, which is not limited here.

After modulating, the terminal transmits a signal to the network device by mapping the modulated data symbols to the RE, and no any signal is transmitted at the RE corresponding to the segment formed by the padded bits for placeholders, that is, an empty symbol is transmitted. A huge quantity of terminals may use the same procedure to transmit data simultaneously at the configured RE.

In the methods for data transmission provided by the embodiment of the present application, by performing segmenting and bit padding on the encoded bits and interleaving the bit segments obtained by segmenting and performing bit padding in unit of segment, the encoded bit segments may be dispersed and the data symbols obtained by subsequently modulating the encoded bit segments are correspondingly mapped to different REs in a relatively dispersed manner, the transmission signals between the terminals may be separated as much as possible, and the base station may accurately detect the data from each terminal.

In an embodiment, after modulating the each of the interleaved encoded bit segments into the one or more to-be-transmitted data symbols, the method further includes:

transmitting a demodulation reference signal (DMRS) symbol to the network device based on a resource element (RE) for transmitting the data symbols.

In an embodiment, due to the segmented interleaving mode, the REs for transmitting the data symbols for the terminal are dispersed in a larger frequency domain resource range. In case that the traditional DMRS transmission mode is adopted, the DMRS needs to be evenly distributed in the frequency domain resource range for the PUSCH multiplexing, which will result in a larger DMRS overhead.

In order to reduce the DMRS overhead for sparse PUSCH, in the embodiment of the present application, the terminal may also determine the RE for transmitting the DMRS symbol to the network device based on the RE for transmitting the data symbols after segmenting and modulating the encoded bits into data symbols.

Since the data packet transmitted from each terminal in the URAT is small and the quantity of frequency domain subcarriers actually occupied by the PUSCH is small, the RE for transmitting the DMRS symbol to the network device is determined based on the RE for transmitting the data symbols, instead of evenly distributing the DMRS in the frequency domain resource range for the PUSCH multiplexing, which may effectively reduce the DMRS overhead.

In an embodiment, transmitting the DMRS symbol to the network device based on the RE for transmitting the data symbols may include transmitting the DMRS symbol to the network device at the RE for transmitting data symbols.

For example, the DMRS symbol may be mapped to the RE for transmitting data symbols. In an embodiment, the DMRS symbol may be transmitted at each RE for transmitting data symbols, or may be transmitted at some REs for transmitting data symbols, and the specific situation is not limited.

In an embodiment, transmitting the DMRS symbol to the network device based on the RE for transmitting the data symbols may also include transmitting the DMRS symbol at an RE adjacent to the RE for transmitting data symbols, or transmitting the DMRS symbol at other REs determined based on the RE for transmitting data symbols, and the specific situation is not limited.

In an embodiment, transmitting the DMRS symbol to the network device at the RE for transmitting the data symbols includes:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

In an embodiment, for any target encoded bit segment among interleaved M encoded bit segments, the terminal may select one or more to-be-transmitted target DMRS symbols from a DMRS pilot sequence in a specific manner after determining the target data symbol obtained by modulating the target encoded bit segment.

For example, one or more target DMRS symbols at corresponding positions may be selected from a DMRS pilot sequence based on a position order of the target encoded bit segment in the M interleaved encoded bit segments.

For example, one or more target DMRS symbols at corresponding positions may be selected from a DMRS pilot sequence based on a position order of RE at which a data symbol exist, that is, from low frequency to high frequency.

After determining the target data symbol and the to-be-transmitted target DMRS symbol, the terminal may multiplex the target data symbol and the target DMRS symbol at the same RE segment by a code division multiplexing mode and transmit them to the network device, where the same RE segment refers to an RE segment including all REs for transmitting the target data symbol.

By code-division multiplexing the data symbol and the DMRS symbol at one RE for transmission, the problem of excessive overhead due to uniform distribution of DMRS in the frequency domain may be solved, and the requirements of channel estimation performance may be satisfied by inserting only a small quantity of DMRS, which also improves the transmission performance of uncoordinated non-orthogonal multiple access technology.

In an embodiment, before performing segmenting and bit padding on the encoded bits to obtain the K bit segments, the method further includes:

receiving indication information transmitted from the network device, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

In an embodiment, before performing segmenting and bit padding on encoded bits, the terminal may receive the indication information transmitted from the network device and process the coded bits based on an associated parameter carried in the indication information.

N is the quantity of encoded bits to be processed by the terminal. For example, = the terminal operates 80 encoded bits in case that N = 80.

M is the quantity of segments that the terminal is to segment the encoded bits. For example, the terminal equally segments the encoded bits into 40 segments in case that M = 40.

K is a total quantity of padded bit segments. For example, the total quantity of segments is 200 after the terminal pads the encoded bits with placeholder bits in case that K = 200.

B is the quantity of bits in a bit segment. For example, in case that the quantity of encoded bits is N = 80 and the encoded bits are to be segmented into M = 40 segments, the quantity B of bits in an encoded bit segment is 2. In an embodiment, the quantity B of bits in each padded bit segment may also be 2.

P is the quantity of data symbols obtained after an encoded bit segment is modulated. For example, when the QPSK modulation mode is used, every 2 bits are mapped to 1 data symbol. It assumes that an encoded bit segment includes 6 bits, the encoded bit segment may be modulated to obtain P = 3 data symbols.

Q is the quantity of DMRS symbols corresponding to the data symbol obtained after an encoded bit segment is modulated. Q may take a value greater than or equal to the quantity of antenna ports.

L is the quantity of REs corresponding to each encoded bit segment, that is, a data symbol obtained by segmenting and modulating an encoded bit segment is transmitted at L REs. L may be the quantity of REs to which the data symbol and the DMRS symbol are mapped by code-division multiplexing in case that the data symbol and the DMRS symbol are code-division multiplexed at the same RE segment for transmission.

In an embodiment, the values of parameters such as M, K, B, P, Q, and L in each embodiment of the present application are all positive integers, and specific values can be predetermined based on actual data transmission requirements, which are not limited in the present application.

FIG. 4 is a second schematic flowchart of a method for data transmission according to an embodiment of the present application. The method is performed by a network device (for example, a base station). As shown in FIG. 4, the method includes the following steps:

step 400, receiving a data signal transmitted from a terminal;

step 401, determining a resource element (RE) used by a terminal transmitting data symbols based on an RE corresponding to the data signal and a mode used by the terminal to interleave bit segments; and

step 402, completing a detection for the data symbols transmitted from the terminal based on the RE used by the terminal transmitting the data symbols to obtain encoded bits transmitted from the terminal.

In an embodiment, after receiving a preamble signal transmitted from the terminal, the network device may detect and decode metadata bits, and then obtain the specific interleaving mode used by the terminal based on the metadata bits, that is, the specific interleaving mode used by the terminal to interleave K bit segments in units of segments. Therefore, after receiving the data signal transmitted from the terminal, the network device may detect that the terminal has transmitted data symbols at which REs on based on the specific interleaving mode used by the terminal.

After performing channel estimation, the network device may perform operations such as decoding, deinterleaving and demodulation on the data symbols using the received signal at the RE for transmitting the data symbols based on the channel estimation result to obtain the encoded bits transmitted from the terminal.

In the methods for data transmission provided by the embodiment of the present application, by performing segmenting and bit padding on the encoded bits and interleaving the bit segments obtained by segmenting and performing bit padding in unit of segment, the terminal may disperse the encoded bit segments and may correspondingly map the data symbols obtained by subsequently modulating the encoded bit segments to different REs in a relatively dispersed manner, the transmission signals between the terminals may be separated as much as possible, and the base station may correspondingly accurately detect the data transmitted from each terminal based on the bit segment interleaving used by the terminal.

In an embodiment, completing the detection for the data symbols transmitted from the terminal based on the RE used by the terminal transmitting the data symbols may include:

determining an RE used by the terminal to transmit a demodulation reference signal (DMRS) symbol based on the RE used by the terminal transmitting the data symbols;

decoding the DMRS symbol using a received signal at the RE used by the terminal to transmit the DMRS symbol to determine a DMRS symbol transmitted from the terminal; and

performing channel estimation based on the DMRS symbol, and completing the detection for data symbols transmitted from the terminal based on a channel estimation result.

In an embodiment, after determining the RE used by the terminal transmitting the data symbols, the network device may determine the RE for transmitting DMRS symbols based on the RE for transmitting data symbols, where the RE for transmitting DMRS symbols may be an RE for transmitting data symbols, or an RE adjacent to an RE for transmitting data symbols, or other REs determined based on the RE for transmitting data symbols, etc., and the specific situation is not limited, as long as it is consistent with the mode used by the terminal.

The network device may then decode the DMRS symbol using a received signal at the RE used by the terminal to transmit the DMRS symbol to obtain the DMRS symbol transmitted from the terminal, perform channel estimation based on the DMRS symbol, and complete the detection for data symbols transmitted from the terminal based on a channel estimation result.

In an embodiment, completing the detection for the data symbols transmitted from the terminal based on the RE used by the terminal transmitting the data symbols includes:

decoding a demodulation reference signal (DMRS) symbol segment by segment using a received signal at the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

In an embodiment, in case that the terminal multiplexes the data symbol and the DMRS symbol to one RE segment for transmission, after receiving the data signal transmitted from the terminal and determining the RE for transmitting the data symbol, the network device may decode the DMRS symbol segment by segment based on the received signal at the RE to obtain the DMRS symbol transmitted from the terminal, perform channel estimation based on the obtained DMRS, and then perform operations such as decoding, deinterleaving and demodulation of the data symbol based on the channel estimation result and using the received signal at the RE for transmitting the data symbols to obtain the encoded bit transmitted from the terminal.

By code-division multiplexing the data symbol and the DMRS symbol at one RE for transmission, the problem of excessive overhead due to uniform distribution of DMRS in the frequency domain may be solved, and the requirements of channel estimation performance may be satisfied by inserting only a small quantity of DMRS, which also improves the transmission performance of uncoordinated non-orthogonal multiple access technology.

In an embodiment, before receiving the data signal transmitted from the terminal, the method further includes:

transmitting indication information to the terminal, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

In an embodiment, before the terminal performs data transmission, the network device may transmit indication information to the terminal, the terminal may process the encoded bits based on the associated parameters carried in the indication information. In an embodiment, after receiving the transmission signal from the terminal, the network device may also detect the data transmitted from the terminal based on these associated parameters.

N is the quantity of encoded bits to be processed by the terminal. For example, = the terminal operates 80 encoded bits in case that N = 80.

M is the quantity of segments that the terminal is to segment the encoded bits. For example, the terminal evenly segments the encoded bits into 40 segments in case that M = 40.

K is a total quantity of padded bit segments. For example, the total quantity of segments is 200 after the terminal pads the encoded bits with placeholder bits in case that K = 200.

B is the quantity of bits in a bit segment. For example, in case that the quantity of encoded bits is N = 80 and the encoded bits are to be segmented into M = 40 segments, the quantity B of bits in an encoded bit segment is 2. In an embodiment, the quantity B of bits in each padded bit segment may also be 2.

P is the quantity of data symbols obtained after an encoded bit segment is modulated. For example, when the QPSK modulation is used, every 2 bits are mapped to 1 data symbol. It assumes that an encoded bit segment includes 6 bits, the encoded bit segment may be modulated to obtain P = 3 data symbols.

Q is the quantity of DMRS symbols corresponding to the data symbol obtained after an encoded bit segment is modulated. Q may take a value greater than or equal to the quantity of antenna ports.

L is the quantity of REs corresponding to each encoded bit segment, that is, a data symbol obtained by segmenting and modulating an encoded bit segment is transmitted at L REs. L may be the quantity of REs to which the data symbol and the DMRS symbol are mapped by code-division multiplexing in case that the data symbol and the DMRS symbol are code-division multiplexed at the same RE segment for transmission.

The methods provided in the embodiments of the present application are based on the same concept, the implementation of each method may refer to each other, and the same part is not be repeated here.

The methods provided in the above embodiments of the present application are illustrated below by examples under specific application scenarios.

Embodiment 1: L = 2, which corresponds that P = 1 data symbol and Q = 1 DMRS symbol are code-division multiplexed at 2 REs, and the DMRS overhead is 1/2.

(1) The terminal segments N = 80 encoded bits into M = 40 segments, each segment has B = 2 bits, and N = M * B.

(2) The terminal performs bit padding after segmenting the encoded bits and the padded bits are uncertain bits, that is, bits used only as placeholders. After padding, a total of K = 200 segments are formed, each segment has B = 2 bits. That is, 320 uncertain bits are padded, and a total of 400 bits are obtained.

(3) The terminal interleaves K = 200 segments in unit of segment using an interleaver.

In this embodiment, the interleaver is an interleaver with a depth of 200 and 10 rows by 20 columns. The total 400 bits are interleaved in unit of segment B = 2. The terminal proceeds to complete the interleaving of K = 200 segments in a line-in-column-out manner starting from a specific start position.

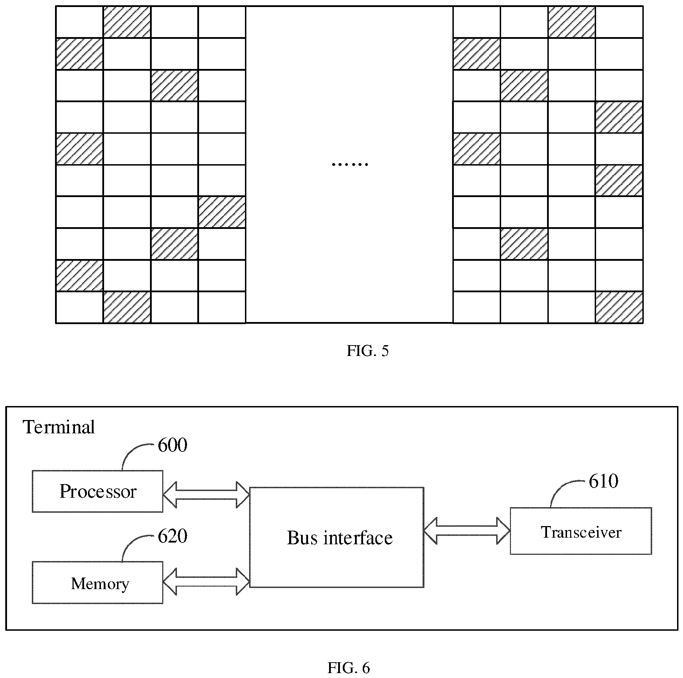

FIG. 5 is a schematic diagram of interleaved bit segments according to an embodiment of the present application. As shown in FIG. 5, the blocks filled with oblique lines are segments of encoded bits, and the blocks without pattern filling are segments of uncertain bits.

(4) The terminal modulates the encoded bit segments using the QPSK modulation mode. That is, 2 bits are mapped to a modulation symbol, B = 2 bits are modulated to obtain P = 1 symbol, and Q = 1 symbol at the corresponding position is selected from the pilot sequence at the same time, and P + Q symbols are mapped to adjacent L = 2 resource elements (REs) using the OCC.

In this embodiment, P = 1, Q = 1, L = 2, and B = 2 bits of a certain segment, such as 00, are mapped to P = 1 modulation symbol, for example 0.7071 + 0.7071j. Q = 1 DMRS symbol at the corresponding position, for example 0.1255-0.6588j, is selected from the pilot sequence, and 1 modulation symbol and 1 DMRS symbol are multiplexed using OCC. For example, spread spectrum is performed on the modulation symbol using [11] to obtain 0.7071 + 0.7071j and 0.7071 + 0.7071j and spread spectrum is performed on the DMRS symbol using [1 -1] to obtain 0.1255-0.6588j and -0.1255 + 0.6588j and both 0.7071 + 0.7071j and 0.7071 + 0.7071j and 0.1255-0.6588j and -0.1255 + 0.6588j are merged to L = 2 REs to obtain 0.8326 + 0.0483j and 0.5816 + 1.3659j respectively.

(5) Superimposed modulation symbols are transmitted at the corresponding resource elements, and no signal is transmitted at the resource elements corresponding to the uncertain bits.

In this embodiment, the symbol 0.8326 + 0.0483j is transmitted at the first RE of L = 2 REs, and the symbol 0.5816 + 1.3659j is transmitted at the second RE of L = 2 REs. There are a total of K * L = 400 REs, but no signal is transmitted at the resource elements corresponding to the uncertain bits, that is, M * L = 80 symbols are actually transmitted.

Embodiment 2: L = 4, which corresponds that 3 data symbols and 1 DMRS symbol are code-division multiplexed at 4 REs, and the DMRS overhead is 1/4.

(1) The terminal segments N = 120 encoded bits into M = 20 segments, each segment has B = 6 bits, and N = M * B.

(2) The terminal performs bit padding after segmenting the encoded bits and the padded bits are uncertain bits, that is, bits used only as placeholders. After padding, a total of K = 200 segments are formed, each segment has B = 6 bits. That is, 1080 uncertain bits are padded, and a total of 1200 bits are obtained.

(3) The terminal interleaves K = 200 segments in unit of segment using an interleaver.
In this embodiment, the interleaver is an interleaver with a depth of 200 and 10 rows by 20 columns. The total 1200 bits are interleaved in unit of segment B = 6. The terminal proceeds to complete the interleaving of K = 200 segments in a line-in-column-out manner starting from a specific start position.

(4) The terminal modulates the encoded bit segments using the QPSK modulation mode. That is, 2 bits are mapped to a modulation symbol, B = 6 bits are modulated to obtain P = 3 symbols, Q = 1 symbol at the corresponding position is selected from the pilot sequence, and P + Q symbols are mapped to adjacent L = 4 resource elements (REs) using the OCC.
In this embodiment, P = 3, Q = 1, L = 4, and B = 6 bits of a certain segment, such as 00 01 11, are mapped to P = 3 modulation symbols, for example 0.7071 + 0.7071j, -0.7071 + 0.7071j, -0.7071-0.7071j. Q = 1 DMRS symbol at the corresponding position, for example 0.1255-0.6588j, is selected from the pilot sequence. 3 modulation symbols and 1 DMRS symbol are multiplexed using OCC. For example, spread spectrum is performed on a first modulation symbol using [1 1 1 1], spread spectrum is performed on a second modulation symbol using [1 -1 1 -1], spread spectrum is performed on a third modulation symbol using [1 1 -1 -1], and spread spectrum is performed on the DMRS symbol using [1 -1 -1 1]. Finally, the obtained spread spectrum symbols are added and placed at L = 4 REs.

(5) Superimposed modulation symbols are transmitted at the corresponding resource elements, and no signal is transmitted at the resource elements corresponding to the uncertain bits.

In this embodiment, the four symbols subjected to spread spectrum and addition are transmitted at L = 4 REs, and there are a total of K * L = 800 REs, no signal is transmitted at the resource elements corresponding to the uncertain bits. That is, M * L = 80 symbols are actually transmitted.

Embodiment 3: L = 4, which corresponds that 4 data symbols and 1 DMRS symbol are code-division multiplexed at 4 REs, and the DMRS overhead is 0.

(1) The terminal segments N = 120 encoded bits into M = 15 segments, each segment has B = 8 bits, and N = M * B.

(2) The terminal performs bit padding after segmenting the encoded bits and the padded bits are uncertain bits, that is, bits used only as placeholders. After padding, a total of K = 150 segments are formed, each segment has B = 8 bits. That is, 1080 uncertain bits are padded, and a total of 1200 bits are obtained.

(3) The terminal interleaves K = 150 segments in unit of segment using an interleaver.
In this embodiment, the interleaver is an interleaver with a depth of 150 and 10 rows by 15 columns. The total 1200 bits are interleaved in unit of segment B = 8. The terminal proceeds to complete the interleaving of K = 150 segments in a line-in-column-out manner starting from a specific start position.

(4) The terminal modulates the encoded bit segments using the QPSK modulation mode. That is, 2 bits are mapped to a modulation symbol, B = 8 bits are modulated to obtain P = 4 symbols, Q = 1 symbol at the corresponding position is selected from the pilot sequence, and P + Q symbols are mapped to adjacent L = 4 resource elements (REs) using the OCC mode.
In this embodiment, P = 4, Q = 1, L = 4, and B = 8 bits of a certain segment, such as 00 01 11 10, are mapped to P = 4 modulation symbols. For example, 0.7071 + 0.7071j, -0.7071 + 0.7071j, -0.7071-0.7071j, and 0.7071-0.7071j. Q = 1 DMRS symbol at the corresponding position, for example 0.1255-0.6588j, is selected from the pilot sequence. 4 modulation symbols and 1 DMRS symbol are multiplexed using, e.g., a PDMA code sequence. Spread spectrum is performed on a first modulation symbol using [1 -1 j -1], spread spectrum is performed on a second modulation symbol using [1 j 1 -1], spread spectrum is performed on a third modulation symbol using [1 -j 1 -1], and spread spectrum is performed on the DMRS symbol using [1 1 -j 1]. Finally, the obtained spread spectrum symbols are added and placed at L = 4 REs.

(5) Superimposed modulation symbols are transmitted at the corresponding resource elements, and no signal is transmitted at the resource elements corresponding to the uncertain bits.

In this embodiment, the four symbols subjected to spread spectrum and addition are transmitted at L = 4 REs, and there are a total of K * L = 600 REs, no signal is transmitted at the resource elements corresponding to the uncertain bits. That is, M * L = 60 symbols are actually transmitted.

Embodiment 4: Embodiment at a network device side.

(1) The network device transmits signaling to notify the terminal of segmentation information of the total transmission bit block, including at least one of the values of parameters such as N, K, M, B, P, Q, or L.
In this embodiment, N = 80, K = 200, M = 40, B = 2, P = 1, Q = 1, and L = 2.
(2) The network device receives the preamble signal from the terminal, detects and decodes the preamble signal to obtain a metadata bit.
In this embodiment, the network device may detect and decode the metadata bit from the preamble signal transmitted from the terminal, and may obtain a specific interleaving mode used by the terminal based on the metadata bit.
(3) The network device receives the data signal from the terminal, detects and obtains the received signals at K * L = 400 resource elements.
In this embodiment, K = 200, L = 2, and the network device detects and obtains 400 received signals $y_i$, where i = 1 ~ 400.
(4) The network device determines the interleaving mode used by the terminal based on the metadata bit, and obtains the received signals at M * L = 80 resource elements through the interleaving mode.
In this embodiment, the interleaver is an interleaver with a depth of 200 and 10 rows by 20 columns. The network device interleaves the total 400 bits in unit of segment B = 2. The network device obtains a start position of the data input to the interleaver and line-in-column-out based on the specific interleaving mode used by the terminal, may learn positions of the M = 40 bit segments from the terminal in the K = 200 segments, and further obtains the received signals

$z_i$, where $i = 1 \sim 80$, of the corresponding terminal.

(5) The network device performs OCC decoding on $Q = 1$ DMRS segment by segment using the received signal at $M * L = 80$ resource elements, and performs channel estimation based on the corresponding transmitted DMRS.

In this embodiment, there are $M * L = 80$ $z_i$, each $L = 2$ symbols is 1 segment, and the network device performs OCC decoding on $Q = 1$ DMRS segment by segment. For example, for the signals $z_1 = h * (0.8326 + 0.0483j) + n_1$ and $z_2 = h * (0.5816 + 1.3659j) + n_2$ correspond to the two REs in embodiment 1, where h is a channel from the terminal to the network device and the channels at two adjacent REs are the same, OCC decoding is performed using a spread spectrum sequence [1 -1] for the DMRS and the following may be obtained based on the corresponding DMRS symbol of 0.1255-0.6588j:

$$2 * h' = (z1 * 1 + z2 * (-1))/(0.1255-0.6588j)$$

$$= h * (0.8326-0.5816 + 0.0483j-1.3659j + n_1-n_2)/(0.1255-0.6588j)$$

$$= h * (0.251-1.3176j + n_1-n_2)/(0.1255-0.6588j) = 2 * h + n_3,$$

and thus the channel estimation $h' = h + n_3/2$ may be obtained.

(6) The network device performs OCC decoding on P to-be-transmitted data symbols segment by segment using the received signal at $M * L = 80$ resource elements, and completes the signal detection of M segment bits based on the estimated channel.

In this embodiment, there are $M * L = 80$ $z_i$, each $L = 2$ symbols is 1 segment, and OCC decoding is performed on $P = 1$ modulation symbol segment by segment. For example, for the signals $z_1 = h * (0.8326 + 0.0483j) + n_1$ and $z_2 = h * (0.5816 + 1.3659j) + n_2$ correspond to the two REs in embodiment 1, where h is the channel from the terminal to the network device and the channels on two adjacent REs are the same, OCC decoding is performed using the spread spectrum sequence [1 1] for the modulation symbol to obtain:

$$z_3 = z_1 * 1 + z_2 * 1 = h * (0.8326 + 0.0483j) + h * (0.5816 + 1.3659j) + n_1 + n_2$$

$$= h * (1.4142 + 1.4142j) + n_1 + n_2,$$

and detected modulation symbol $= z_3 * conj(h')/2 = (0.7071 + 0.7071j) + n_4$.

(7) The network device obtains $N = 80$ bits through deinterleaving operation and performs decoding.

In this embodiment, the network device obtains M=40 modulation symbols through deinterleaving operation, obtains $N = 80$ bits after QPSK soft demodulation, and decodes 80 encoded bits.

(8) The network device performs CRC check on the decoding result and feeds the check result back to the terminal.

The methods and the devices are based on the same concept, the implementation of the devices and the methods can be referred to each other since the principles of the methods and the devices are similar, and the same part is not be repeated here.

FIG. 6 is a schematic structural diagram of a terminal according to an embodiment of the present application. As shown in FIG. 6, the terminal includes a memory 620, a transceiver 610, and a processor 600, where the processor 600 and the memory 620 may also be arranged physically separately.

The memory 620 is used for storing computer programs; the transceiver 610 is used for receiving and transmitting data under control of the processor 600.

In an embodiment, the transceiver 610 is used for receiving and transmitting data under the control of the processor 600.

In FIG. 6, a bus architecture may include any quantity of interconnected buses and bridges, which are linked together through various circuits of one or more processors represented by the processor 600 and one or more memories represented by the memory 620. The bus architecture may also link together various other circuits, such as peripherals, voltage regulators, and power management circuits, which are well known in the art, and therefore will not be further described in the present application. The bus interface provides an interface. The transceiver 610 may be multiple elements, i.e., including a transmitter and a receiver, units for providing communication with various other devices over transmission media including wireless channels, wired channels, fiber optic cables, and the like.

The processor 600 is responsible for managing the bus architecture and general processing, and the memory 620 may store data used by the processor 600 when performing operations.

The processor 600 may be a central processing unit (CPU), an application specific integrated circuit (ASIC), a field-programmable gate array (FPGA), or a complex programmable logic device (CPLD), the processor can also use a multi-core architecture.

The processor 600 is configured to perform any one of the methods according to the embodiments of the present application when executing the executable instructions by calling the computer program stored in the memory 620. For example, the method includes:

performing segmenting and bit padding on encoded bits to obtain K bit segments, where the K bit segments include M encoded bit segments and K-M padded bit segments, K and M are positive integers, and K is greater than M;

interleaving the K bit segments in unit of segment, modulating each of the interleaved encoded bit segments into one or more to-be-transmitted data symbols, and modulating each of the interleaved padded bit segments into one or more empty symbols; and

transmitting the data symbols and the empty symbols to a network device.

In an embodiment, after modulating the each of the interleaved encoded bit segments into the one or more to-be-transmitted data symbols, the method further includes:
transmitting a demodulation reference signal (DMRS) symbol to the network device based on a resource element (RE) for transmitting the data symbols.

In an embodiment, transmitting the DMRS symbol to the network device based on the RE for transmitting the data symbols includes:
transmitting the DMRS symbol to the network device at the RE for transmitting the data symbols.

In an embodiment, transmitting the DMRS symbol to the network device at the RE for transmitting the data symbols includes:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

In an embodiment, before performing segmenting and bit padding on the encoded bits to obtain the K bit segments, the method further includes:

receiving indication information transmitted from the network device, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

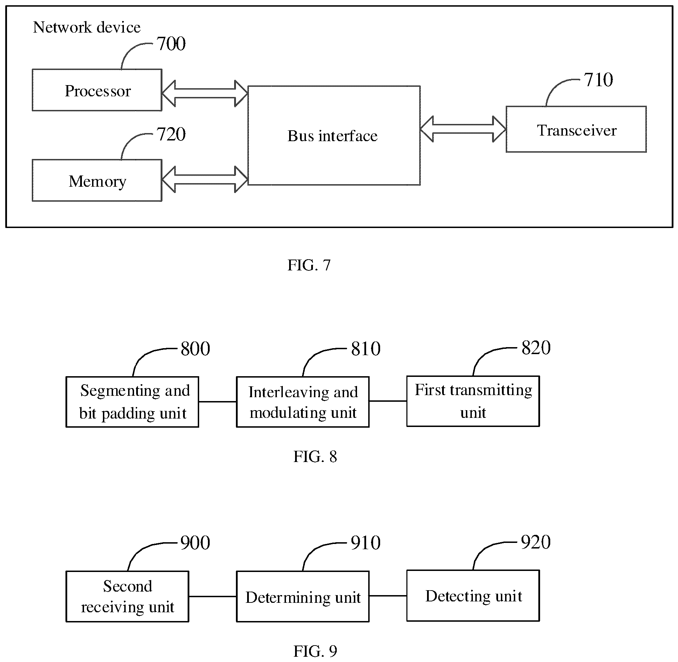

FIG. 7 is a schematic structural diagram of a network device according to an embodiment of the present application. As shown in FIG. 7, the network device includes a memory 720, a transceiver 710, and a processor 700, where the processor 700 and the memory 720 may also be arranged physically separately.

The memory 720 is used for storing computer programs; the transceiver 710 is used for receiving and transmitting data under control of the processor 700.

In an embodiment, the transceiver 710 is used for receiving and transmitting data under the control of the processor 700.

In FIG. 7, a bus architecture may include any quantity of interconnected buses and bridges, which are linked together through various circuits of one or more processors represented by the processor 700 and one or more memories represented by the memory 720. The bus architecture may also link together various other circuits, such as peripherals, voltage regulators, and power management circuits, which are well known in the art, and therefore will not be further described in the present application. The bus interface provides an interface. The transceiver 710 may be multiple elements, i.e., including a transmitter and a receiver, units for providing communication with various other devices over transmission media including wireless channels, wired channels, fiber optic cables, and the like.

The processor 700 is responsible for managing the bus architecture and general processing, and the memory 720 may store data used by the processor 700 when performing operations.

The processor 700 may be a CPU, ASIC, FPGA or CPLD, and the processor may also use a multi-core architecture.

The processor 700 is configured to perform any one of the methods according to the embodiments of the present application when executing the executable instructions by calling the computer program stored in the memory 720. For example, the method includes:

receiving a data signal transmitted from a terminal;

determining a resource element (RE) used by a terminal transmitting data symbols based on an RE corresponding to the data signal and a mode used by the terminal to interleave bit segments; and

completing a detection for the data symbols transmitted from the terminal based on the RE used by the terminal transmitting the data symbols to obtain encoded bits transmitted from the terminal.

In an embodiment, completing the detection for the data symbols transmitted from the terminal based on the RE used by the terminal transmitting the data symbols includes:

decoding a demodulation reference signal (DMRS) symbol segment by segment using a received signal at the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

In an embodiment, before receiving the data signal transmitted from the terminal, the method further includes:

transmitting indication information to the terminal, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

It should be noted here that the above-mentioned terminal and the network device according to the embodiments of the present application may implement all the method steps implemented by the above-mentioned method embodiments, and can achieve the same effect. The same parts and beneficial effects as the same method embodiments are not repeated here.

FIG. 8 is a first schematic structural diagram of an apparatus for data transmission according to an embodiment of the present application. As shown in FIG. 8, the apparatus includes:

a segmenting and bit padding unit 800, used for performing segmenting and bit padding on encoded bits to obtain K bit segments, where the K bit segments include M encoded bit segments and K-M padded bit segments, K and M are positive integers, and K is greater than M;

an interleaving and modulating unit 810, used for interleaving the K bit segments in unit of segment, modulating each of the interleaved encoded bit segments into one or more to-be-transmitted data symbols, and modulating each of the interleaved padded bit segments into one or more empty symbols; and

a first transmitting unit 820, used for transmitting the data symbols and the empty symbols to a network device.

In an embodiment, the first transmitting unit 820 is further used for:
transmitting a demodulation reference signal (DMRS) symbol to the network device based on a resource element (RE) for transmitting the data symbols.

In an embodiment, transmitting the DMRS symbol to the network device based on the RE for transmitting the data symbols includes:
transmitting the DMRS symbol to the network device at the RE for transmitting the data symbols.

In an embodiment, transmitting the DMRS symbol to the network device at the RE for transmitting the data symbols includes:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

In an embodiment, the apparatus further includes:

a first receiving unit, used for receiving indication information transmitted from the network device, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

FIG. 9 is a second schematic structural diagram of an apparatus for data transmission according to an embodiment of the present application. As shown in FIG. 9, the apparatus includes:

a second receiving unit 900, used for receiving a data signal transmitted from a terminal;

a determining unit 910, used for determining a resource element (RE) used by the terminal transmitting data symbols based on an RE corresponding to the data signal and a mode used by the terminal to interleave bit segments; and

a detecting unit 920, used for completing a detection for the data symbols transmitted from the terminal based on the RE used by the terminal transmitting the data symbols to obtain encoded bits transmitted from the terminal.

In an embodiment, completing the detection for the data symbols transmitted from the terminal based on the RE used by the terminal transmitting the data symbols includes:

decoding a demodulation reference signal (DMRS) symbol segment by segment using a received signal at the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

In an embodiment, the apparatus further includes:

a second transmitting unit, used for transmitting indication information to the terminal, where the indication information is used for indicating associated parameters for the terminal to perform data transmission;

the associated parameters for the terminal to perform data transmission include one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above-mentioned apparatus according to the embodiments of the present application can implement all the method steps implemented by the above-mentioned method embodiments, and can achieve the same effect. The same parts and beneficial effects as the same method embodiments are not repeated here.

An embodiment of the present application further provides a computer-readable storage medium storing a computer program that causes a computer to perform the method for data transmission described above.

It should be noted here that the above-mentioned computer-readable storage medium according to the embodiments of the present application may implement all the method steps implemented by the above-mentioned method embodiments, and can achieve the same effect. The same parts and beneficial effects as the same method embodiments are not repeated here.

The computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or "cellular" phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. Network side device may be used to exchange received air frames with Internet Protocol (IP) packets, and act as a router between wireless terminal and the rest of the access network, and the rest of the access network may include an Internet protocol (IP) communication network. The network side devices may also coordinate attribute management for the air interface. For example, the network side device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved node B (HeNB), a relay node (relay node), a femto, a pico base station (pico), etc., which are not limited in the embodiments of the present application. In some network structures, a network side device may include a centralized unit (CU) node and a distributed unit (DU) node, and the centralized unit and the distributed unit may also be geographically separated.

Multi-input multi-output (MIMO) transmission may be performed between the network side device and the UE using one or more antennas and the MIMO transmission may be single user MIMO (SU-MIMO) or multiple user MIMO (MU-MIMO). According to the form and quantity of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for data transmission, performed by a terminal, comprising:

   performing segmenting and bit padding on encoded bits to obtain K bit segments, wherein the K bit segments comprise M encoded bit segments and K-M padded bit segments, K and M are positive integers, and K is greater than M;
   interleaving the K bit segments in unit of segment, modulating each of the interleaved encoded bit segments into one or more to-be-transmitted data symbols, and modulating each of the interleaved padded bit segments into empty symbols; and
   transmitting the data symbols and the empty symbols to a network device.

2. The method of claim 1, wherein after modulating the each of the interleaved encoded bit segments into the one or more to-be-transmitted data symbols, the method further comprises:
   transmitting a demodulation reference signal (DMRS) symbol to the network device based on a resource element (RE) for transmitting the data symbols.

3. The method of claim 2, wherein transmitting the DMRS symbol to the network device based on the RE for transmitting the data symbols comprises:
   transmitting the DMRS symbol to the network device at the RE for transmitting the data symbols.

4. The method of claim 3, wherein transmitting the DMRS symbol to the network device at the RE for transmitting the data symbols comprises:

   for any target encoded bit segment among interleaved M encoded bit segments, determining a target data symbol obtained by modulating the target encoded bit segment;
   selecting one or more to-be-transmitted target DMRS symbols from a DMRS pilot sequence; and
   multiplexing the target DMRS symbol and the target data symbol on a same RE segment by code division and transmitting a multiplexed target DMRS symbol and the target data symbol to the network device.

5. The method of any of claims 1 to 4, wherein before performing segmenting and bit padding on the encoded bits to obtain the K bit segments, the method further comprises:

   receiving indication information transmitted from the network device, wherein the indication information is used for indicating associated parameters for the terminal to perform data transmission;
   the associated parameters for the terminal to perform data transmission comprise one or more of:

   a quantity N of the encoded bits;
   a quantity M of the encoded bit segments;
   a quantity K of the bit segments;
   a quantity B of bits in each bit segment;
   a quantity P of data symbols corresponding to each encoded bit segment;
   a quantity Q of DMRS symbols corresponding to each encoded bit segment; or

a quantity L of REs corresponding to each encoded bit segment.

6. A method for data transmission, performed by a network device, comprising:

receiving a data signal transmitted from a terminal;
determining a resource element (RE) used by the terminal transmitting data symbols based on an RE corresponding to the data signal and a mode used by the terminal to interleave bit segments; and
completing a detection for the data symbols transmitted from the terminal based on the RE used by the terminal transmitting the data symbols to obtain encoded bits transmitted from the terminal.

7. The method of claim 6, wherein completing the detection for the data symbols transmitted from the terminal based on the RE used by the terminal transmitting the data symbols comprises:

decoding a demodulation reference signal (DMRS) symbol segment by segment using a received signal at the RE used by the terminal transmitting the data symbols to determine a DMRS symbol transmitted from the terminal; and
performing channel estimation based on the DMRS symbol, and completing the detection for the data symbols transmitted from the terminal based on a channel estimation result.

8. The method of claim 6 or 7, wherein before receiving the data signal transmitted from the terminal, the method further comprises:

transmitting indication information to the terminal, wherein the indication information is used for indicating associated parameters for the terminal to perform data transmission;
the associated parameters for the terminal to perform data transmission comprise one or more of:

a quantity N of encoded bits;
a quantity M of encoded bit segments;
a quantity K of bit segments;
a quantity B of bits in each bit segment;
a quantity P of data symbols corresponding to each encoded bit segment;
a quantity Q of DMRS symbols corresponding to each encoded bit segment; or
a quantity L of REs corresponding to each encoded bit segment.

9. A terminal, comprising a memory, a transceiver and a processor,
wherein the memory is used for storing a computer program, the transceiver is used for receiving and transmitting data under control of the processor, and the processor is used for reading the computer program in the memory and performing the following operations:

performing segmenting and bit padding on encoded bits to obtain K bit segments, wherein the K bit segments comprise M encoded bit segments and K-M padded bit segments, K and M are positive integers, and K is greater than M;
interleaving the K bit segments in unit of segment, modulating each of the interleaved encoded bit segments into one or more to-be-transmitted data symbols, and modulating each of the interleaved padded bit segments into one or more empty symbols; and
transmitting the data symbols and the empty symbols to a network device.

10. The terminal of claim 9, wherein after modulating the each of the interleaved encoded bit segments into the one or more to-be-transmitted data symbols, the operations further comprise:
transmitting a demodulation reference signal (DMRS) symbol to the network device based on a resource element (RE) for transmitting the data symbols.

11. The terminal of claim 10, wherein transmitting the DMRS symbol to the network device based on the RE for transmitting the data symbols comprises:
transmitting the DMRS symbol to the network device at the RE for transmitting the data symbols.

12. The terminal of claim 11, wherein transmitting the DMRS symbol to the network device at the RE for transmitting the data symbols comprises:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

13. The terminal of any of claims 9 to 12, wherein before performing segmenting and bit padding on the encoded bits to obtain the K bit segments, the operations further comprise:

receiving indication information transmitted from the network device, wherein the indication information is used for indicating associated parameters for the terminal to perform data transmission;

the associated parameters for the terminal to perform data transmission comprise one or more of:

a quantity N of the encoded bits;

a quantity M of the encoded bit segments;

a quantity K of the bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

14. A network device, comprising a memory, a transceiver and a processor,

wherein the memory is used for storing a computer program, the transceiver is used for receiving and transmitting data under control of the processor, and the processor is used for reading the computer program in the memory and performing the following operations:

receiving a data signal transmitted from a terminal;

determining a resource element (RE) used by the terminal transmitting data symbols based on an RE corresponding to the data signal and a mode used by the terminal to interleave bit segments; and

completing a detection for the data symbols transmitted from the terminal based on the RE used by the terminal transmitting the data symbols to obtain encoded bits transmitted from the terminal.

15. The network device of claim 14, wherein completing the detection for the data symbols transmitted from the terminal based on the RE used by the terminal transmitting the data symbols comprises:

decoding a demodulation reference signal (DMRS) symbol segment by segment using a received signal at the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

16. The network device of claim 14 or 15, wherein before receiving the data signal transmitted from the terminal, the operations further comprise:

transmitting indication information to the terminal, wherein the indication information is used for indicating associated parameters for the terminal to perform data transmission;

the associated parameters for the terminal to perform data transmission comprise one or more of:

a quantity N of encoded bits;

a quantity M of encoded bit segments;

a quantity K of bit segments;

a quantity B of bits in each bit segment;

a quantity P of data symbols corresponding to each encoded bit segment;

a quantity Q of DMRS symbols corresponding to each encoded bit segment; or

a quantity L of REs corresponding to each encoded bit segment.

17. An apparatus for data transmission, comprising:

a segmenting and bit padding unit, used for performing segmenting and bit padding on encoded bits to obtain K bit segments, wherein the K bit segments comprise M encoded bit segments and K-M padded bit segments, K and M are positive integers, and K is greater than M;

an interleaving and modulating unit, used for interleaving the K bit segments in unit of segment, modulating each of the interleaved encoded bit segments into one or more to-be-transmitted data symbols, and modulating each of the interleaved padded bit segments into one or more empty symbols; and

a first transmitting unit, used for transmitting the data symbols and the empty symbols to a network device.

18. The apparatus of claim 17, wherein the first transmitting unit is further used for:

transmitting a demodulation reference signal (DMRS) symbol to the network device based on a resource element (RE) for transmitting the data symbols.

19. The apparatus of claim 18, wherein transmitting the DMRS symbol to the network device based on the RE for transmitting the data symbols comprises:

transmitting the DMRS symbol to the network device at the RE for transmitting the data symbols.

20. The apparatus of claim 19, wherein transmitting the DMRS symbol to the network device at the RE for transmitting the data symbols comprises:

for any target encoded bit segment among interleaved M encoded bit segments, determining a target data symbol obtained by modulating the target encoded bit segment;

selecting one or more to-be-transmitted target DMRS symbols from a DMRS pilot sequence; and

multiplexing the target DMRS symbol and the target data symbol on a same RE segment by code division and transmitting a multiplexed target DMRS symbol and the target data symbol to the network device.

21. The apparatus of any one of claims 17 to 20, further comprising:

a first receiving unit, used for receiving indication information transmitted from the network device, wherein the indication information is used for indicating associated parameters for a terminal to perform data transmission; the associated parameters for the terminal to perform data transmission comprise one or more of:

a quantity N of the encoded bits;
a quantity M of the encoded bit segments;
a quantity K of the bit segments;
a quantity B of bits in each bit segment;
a quantity P of data symbols corresponding to each encoded bit segment;
a quantity Q of DMRS symbols corresponding to each encoded bit segment; or
a quantity L of REs corresponding to each encoded bit segment.

22. An apparatus for data transmission, comprising:

a second receiving unit, used for receiving a data signal transmitted from a terminal;

a determining unit, used for determining a resource element (RE) used by the terminal transmitting data symbols based on an RE corresponding to the data signal and a mode used by the terminal to interleave bit segments; and

a detecting unit, used for completing a detection for the data symbols transmitted from the terminal based on the RE used by the terminal transmitting the data symbols to obtain encoded bits transmitted from the terminal.

23. The apparatus of claim 22, wherein completing the detection for the data symbols transmitted from the terminal based on the RE used by the terminal transmitting the data symbols comprises:

decoding a demodulation reference signal (DMRS) symbol segment by segment using a received signal at the RE used by the terminal transmitting the data symbols to determine a DMRS symbol transmitted from the terminal; and

performing channel estimation based on the DMRS symbol, and completing the detection for data symbols transmitted from the terminal based on a channel estimation result.

24. The apparatus of claim 22 or 23, further comprising:

a second transmitting unit, used for transmitting indication information to the terminal, wherein the indication information is used for indicating associated parameters for the terminal to perform data transmission;
the associated parameters for the terminal to perform data transmission comprise one or more of:

a quantity N of encoded bits;
a quantity M of encoded bit segments;
a quantity K of bit segments;
a quantity B of bits in each bit segment;
a quantity P of data symbols corresponding to each encoded bit segment;
a quantity Q of DMRS symbols corresponding to each encoded bit segment; or
a quantity L of REs corresponding to each encoded bit segment.

25. A computer-readable storage medium storing a computer program, wherein the computer program causes a computer to perform the method of any of claims 1 to 5, or perform the method of any of claims 6 to 8.

FIG. 1

Single-symbol DMRS                    Double-symbol DMRS

FIG. 2

Performing segmenting and bit padding on encoded bits to obtain K bit segments, where the K bit segments include M encoded bit segments and K-M padded bit segments, K and M are positive integers, and K is greater than M    ⌐⌐ 300

Interleaving the K bit segments in unit of segment, modulating each of the interleaved encoded bit segments into one or more to-be-transmitted data symbols, and modulating each of the interleaved padded bit segments into one or more empty symbols    ⌐⌐ 301

Transmitting the data symbols and the empty symbols to a network device    ⌐⌐ 302

FIG. 3

Receiving a data signal transmitted from a terminal    ⌐⌐ 400

Determining an RE used by a terminal transmitting data symbols based on an RE corresponding to the data signal and a mode used by the terminal to interleave bit segments    ⌐⌐ 401

Completing a detection for the data symbols transmitted from the terminal based on the RE used by the terminal transmitting the data symbols to obtain encoded bits transmitted from the terminal    ⌐⌐ 402

FIG. 4

FIG. 5

FIG. 6

FIG. 7

FIG. 8

FIG. 9

## INTERNATIONAL SEARCH REPORT

| International application No. |
| --- |
| **PCT/CN2023/099385** |

**A. CLASSIFICATION OF SUBJECT MATTER**

H04L1/00(2006.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNKI, 3GPP, CNTXT, ENTXTC, VEN: 编码, 比特, 传输, 调制, 非协调随机接入和传输, 分段, 交织, 交织方式, 随机接入, 填充, 资源单元, bit, coding, interleaved, modulation, RE, transmission, uncoordinated, URAT, uncoordinated random access

**C. DOCUMENTS CONSIDERED TO BE RELEVANT**

| Category* | Citation of document, with indication, where appropriate, of the relevant passages | Relevant to claim No. |
| --- | --- | --- |
| A | CN 102136886 A (NEW POSTCOM EQUIPMENT CO., LTD.) 27 July 2011 (2011-07-27) description, paragraphs [0034]-[0077], and figures 1-6 | 1-25 |
| A | CN 103354537 A (BEIJING SAMSUNG COMMUNICATION TECHNOLOGY RESEARCH CO., LTD. et al.) 16 October 2013 (2013-10-16) entire document | 1-25 |
| A | CN 109525359 A (HUAWEI TECHNOLOGIES CO., LTD.) 26 March 2019 (2019-03-26) entire document | 1-25 |
| A | US 2021385865 A1 (INTEL CORPORATION) 09 December 2021 (2021-12-09) entire document | 1-25 |
| A | ERICSSON et al. "RACH Evaluation for MTC in LTE, Text Proposal" *3GPP TSG RAN WG2 #70bis, R2-104189*, 02 July 2010 (2010-07-02), entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 September 2023** | **27 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2023/099385** |

| Patent document cited in search report | | | Publication date (day/month/year) | Patent family member(s) | | | Publication date (day/month/year) |
| --- | --- | --- | --- | --- | --- | --- | --- |
| CN | 102136886 | A | 27 July 2011 | None | | | |
| CN | 103354537 | A | 16 October 2013 | None | | | |
| CN | 109525359 | A | 26 March 2019 | US | 2020220752 | A1 | 09 July 2020 |
| | | | | EP | 3664550 | A1 | 10 June 2020 |
| | | | | WO | 2019052388 | A1 | 21 March 2019 |
| US | 2021385865 | A1 | 09 December 2021 | EP | 3965515 | A1 | 09 March 2022 |
| | | | | CN | 114143744 | A | 04 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210714204